# EUROPÄISCHE PATENTSCHRIFT

(11) **EP 0 912 428 B1**
(45) Veröffentlichungstag und Bekanntmachung des Hinweises auf die Patenterteilung: **01.03.2000**
(21) Anmeldenummer: 97930315.3
(22) Anmeldetag: 10.06.1997
(51) Int. Cl.: B65G 47/26

(54) **MECHANISCHES SENSORELEMENT FÜR FÖRDERGUT AUF EINEM FÖRDERER**
MECHANICAL SENSOR ELEMENT FOR GOODS CONVEYED ON A CONVEYOR
ELEMENT MECANIQUE DE DETECTION D'OBJETS TRANSPORTES SUR UN CONVOYEUR

(30) Priorität: 11.06.1996 US 664308
(43) Veröffentlichungstag der Anmeldung: 06.05.1999
(73) Patentinhaber: MANNESMANN Aktiengesellschaft, 40213 Düsseldorf (DE)
(72) Erfinder: BROWER, Gerald, A., Grandville, MI 49418 (US); DeVRIES, Charles, R., Grand Rapids, MI 49506 (US)
(74) Vertreter: Meissner, Peter E., Dipl.-Ing.
(86) Internationale Anmeldenummer: DE9701204
(87) Internationale Veröffentlichungsnummer: WO9747542

(56) Entgegenhaltungen:
- US-A- 3 000 489
- US-A- 3 115 238
- US-A- 3 826 349
- US-A- 4 202 440
- US-A- 4 278 166
- US-A- 4 658 951

## Beschreibung

Die Erfindung betrifft ein Sensorelement gemäß dem Oberbegriff des Anspruchs 1.

Auf dem Gebiet der Staurollenförderer besteht seit längerer Zeit der Bedarf nach einem mechanischen Sensorelement, für dessen Betätigung eine sehr geringe Betätigungskraft ausreicht. Die Staurollenförderer bestehen im wesentlichen aus einer Vielzahl von in Förderrichtung hintereinander angeordneten Abschnitten, die zum staudrucklosen Aufstauen der Fördergüter abbremsbar sind. Das Signal für die Betätigung der Bremselemente kommt hierbei von den Sensorelementen. Diese Sensorelemente werden entlang der Abschnitte angeordnet, um die Anwesenheit von Fördergutteilen im Bereich des Befestigungsortes mittels Betätigung der Sensorelemente durch die Fördergutteile zu ermitteln. Wenn ein Fördergutteil einen Sensorelement betätigt, werden hierdurch eine oder mehrere in Förderichtung gesehen stromaufwärts gelegene Abschnitte des Stauförderers stillgesetzt.

Derartige Sensorelemente weisen gewöhnlicherweise eine Geberelement auf, das um eine Achse schwenkbar gelagert ist und eine sich aus der Förderfläche des Stauförderers nach oben herausragende Sensorfläche aufweist. Als Achse kann eine Achse einer Rolle des Staurollenförderers dienen oder eine eigene Achse vorgesehen werden. Hierbei ist die Achse im wesentlichen horizontal und quer zur Förderrichtung ausgerichtet. Die herausragende Sensorfläche des Geberelementes ist in Förderrichtung gesehen zur Förderfläche aufwärts geneigt ausgerichtet und in dieser Position von einem Gegengewicht oder einem Federelement gehalten. Ein über ein Federelement vorgespanntes Sensorelement mit einer als Rolle ausgebildeten Sensorfläche ist bereits aus dem US-Patent 5,191,967 bekannt.

Derartige mechanische Sensorelemente sind aber nachweisbar ungeeignet, um von leichten Fördergütern betätigt zu werden. Einer dieser leichten Artikel ist beispielsweise ein Fiberbehälter, der von Postdienstleistungsunternehmen verwendet wird. Diese Behälter werden auch mit geringem oder ohne Inhalt von dem Fördersystem gefördert und weisen ein Leergewicht von weniger als einem halben Kilogramm (one pound) auf, so daß für die Betätigung eines Sensorelementes nur eine Betätigungskraft von weniger als 4,4 Newton (one-half of one pound) zur Verfügung steht.

Frühere Versuche, ein Sensorelement mit einer geringen Betätigungskraft zu schaffen, sahen die Verwendung von Gegengewichten vor, deren Masse nur geringfügig größer war als die Masse des Geberelementes des Sensorelementes. Dennoch überschritt die Betätigungskraft dieser Sensorelemente die Nettodifferenz zwischen dem Gewicht des Sensorelementes und des Gegengewichtes um ein Vielfaches, da die Reibung in der schwenkbaren Lagerung des Geberelementes durch die Lagerbelastung beträchtlich erhöht wird. Diese Lagerbelastung wird durch das kombinierte Gewicht des Sensorelementes und des Gegengewichtes hervorgerufen und führt zur Erhöhung der Reibung in der Lagerung. Die erhöhte Reibung bedingt eine Vergrößerung der Kraft für die Betätigung des Sensorelementes. Somit besteht weiterhin der Bedarf nach einem Sensorelement mit einer geringen Betätigungskraft.

Ausgehend von diesem Stand der Technik liegt der Erfindung die Aufgabe zugrunde, einen mechanisches Sensorelement für die Erkennung von Fördergut auf einem Förderer zu schaffen, für dessen Betätigung eine geringe Kraft ausreichend ist.

Diese Erfindung wird durch einen Sensor mit den Merkmalen des Anspruches 1 gelöst. Vorteilhafte Ausgestaltungen dieses Sensors sind in den Unteransprüchen 2 bis 21 angegeben.

Die vorliegende Erfindung stellt durch die achslose Lagerung des Geberelementes ein Sensorelement mit einer geringen Betätigungskraft zur Verfügung, das hierdurch geeignet ist, zuverlässig und beständig auch die Anwesenheit von leichtgewichtigen Fördergütern zu ermitteln. Hierin ist auch eine Ermittlung von leichten Sortierbehältern, die bei Postdienstleistungsunternehmen Verwendung finden, eingeschlossen. Das Sensorelement ist in besonders einfacherweise herzustellen, zu montieren und außergewöhnlich robust im Betrieb ist.

Diese Sensorelemente für die Verwendung in Förderern mit einer Förderfläche für Fördergut weisen ein Geberelement auf, eine Schwenklagerung, von dem eine Bewegung des Geberelementes um eine horizontale Achse ermöglicht wird, und ein Vorspannelement, von dem das Geberelement in Richtung oberhalb der Förderfläche und somit in den Förderweg des Förderguts hereinragend vorgespannt wird. Die Schwenklagerung ist erfindungsgemäß als achslose Lagerung ausgebildet, die außergewöhnlich reibungsarm arbeitet und darüberhinaus diese Reibungsarmut auch bei auf die Lagerung einwirkende Belastungen, die durch das Gewicht des Geberelementes und die durch das Vorspannelement auf die Lagerung einwirkende Kraft hervorgerufen wird, erhalten bleibt. In einem Auführungsbeispiel ist die achslose Lagerung als Schneidenlagerung ausgebildet, die eine Schneidkante aufweist, die mit ihrem spitzen Ende frei auf einer Unterlage steht. In einer weiteren Ausführungsform ist die achslose Lagerung aus einem flexiblen Element gebildet, das an einem Ende an der Unterlage und an dem anderern Ende an dem Geberelement befestigt ist. Im vorliegenden Fall wird die Unterlage durch eine Ausnehmung in der Stützwand des Tragrahmens des Stauförderers gebildet.

Vorteilhafterweise ist das Vorspannelement als Federelement ausgebildet, das über einen kurzen Hebelarm an dem Geberelement angelenkt ist. Der kurze Hebelarm ermöglicht, daß das Federelement nur in einem geringen Längungsbereich arbeitet. Hierdurch wird eine sehr konstante Vorspannkraft zur Verfügung gestellt, da die Federkraft des Federelementes mit ansteigender Längung des Federelementes anwächst. Obwohl der kurze Hebelarm einen beträchtlichen Anstieg der Federspannung bedingt, führt dies nicht dazu, daß die hieraus resultierende Lagerbelastung des Geberelementes über vermehrte Reibungskräfte zu einem Ansteigen der Betätigungskraft des Geberelements führt. Die Begründung liegt darin, daß die achslose Lagerung durch die Weiterleitung der Lagerbelastung über eine feststehende linienförmige Berührungsfläche im wesentlichen auch bei Ansteigen der Lagerbelastung nicht mit einer Erhöhung der Reibung in der Lagerung reagiert.

Eine weitere vorteilhafte Ausgestaltung der Erfindung besteht in der Herstellung des Geberelementes einschließlich der achslosen Lagerung aus einem einzigen Metallblech, das hierzu ausgestanzt, anschließend zur Versteifung gebördelt wird und die Schneidkante, der Hebelarm und ein Arm für die Beträtigung der Bremselemente für die Abschnitte der Staurollenbahn durch Bördeln ausgebildet werden. Das Geberelement wird in der rechteckigen Ausparung des Tragrahmens des Staufördererd durch die Kraft des Vorspannelementes in Position, d. h. in einer unteren Ecke der Aussparung, gehalten. Nachfolgend wird die Erfindung anhand von zwei in Zeichnungen dargestellten Ausführungsbeispielen näher erläutert. Es zeigen:
- Figur 1: eine Draufsicht auf einen Stauförderer entsprechend der Erfindung,
- Figur 2: eine Ansicht entlang der Schnittlinie II-II in Figur 1,
- Figur 3: eine vergrößerte Ansicht entlang der Schnittlinie III-III in Figur 1,
- Figur 4: eine Ansicht entlang der Schnittlinie IV-IV in Figur 1,
- Figur 5: eine Seitenansicht eines Geberelementes entsprechend der Erfindung,
- Figur 6: eine Vorderansicht des Geberelementes gemäß Figur 5,
- Figur 7: zeigt ein flaches Muster eines Blechteils, das zu einem Geberelement gemäß den Figuren 5 und 6 formbar ist und
- Figur 8: eine Ansicht gemäß Figur 3 in einer weiteren Ausführungsform der Erfindung.

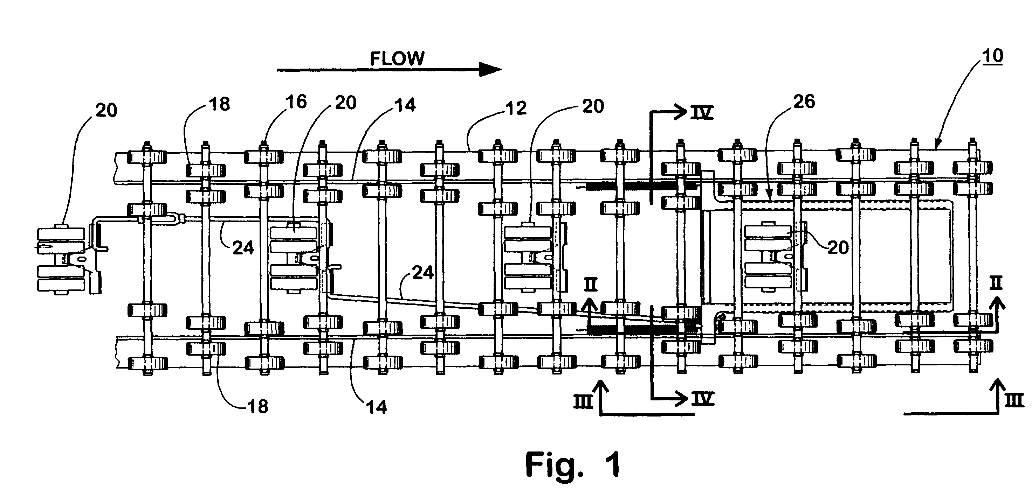

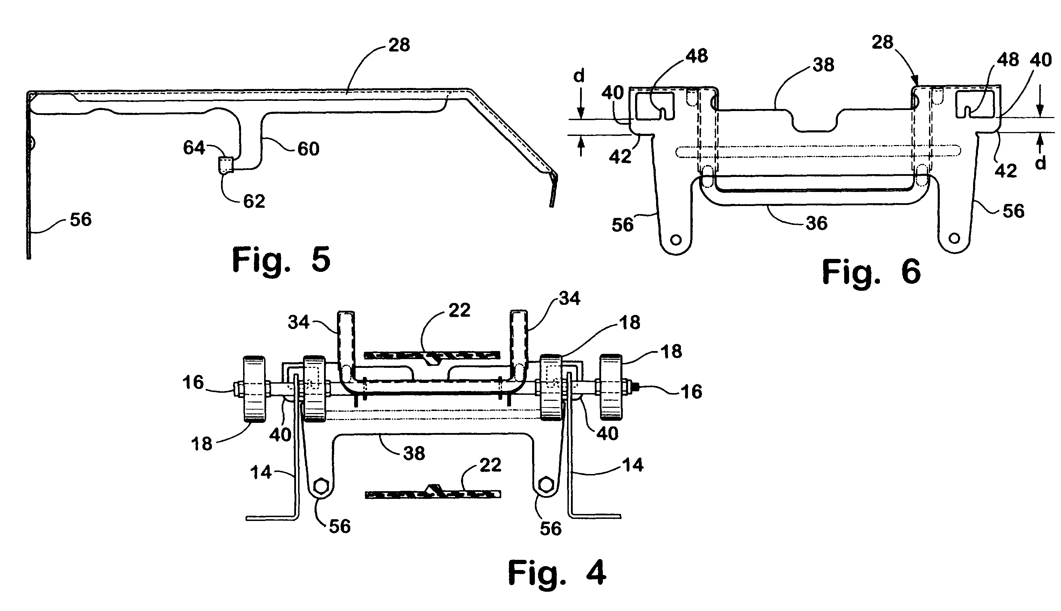

Anhand der Figuren 1 bis 4 wird die Funktionsweise des erfindungsgemäßen mechanischen Sensorelements näher erläutert. Die Figur 1 zeigt eine Draufsicht auf einen Stauförderer 10 mit einem Tragrahmen 12, der zwei parallel zueinander, voneinander beabstandet und in Förderrichtung verlaufende Stützwände 14 aufweist. Zwischen den Stützwänden 14 sind eine Vielzahl von parallel zueinander ausgerichteten und voneinander beabstandeten Achsen 16 gelagert, auf denen jeweils mehrere Rollen 18 frei drehbar gelagert sind. Desweiteren weist der Stauförderer 10 eine Vielzahl von Betätigungselementen 20 auf, über die bedarfsweise ein endlos angetriebenes Zugmittel 22 über die Förderfläche des Stauförderers 10 angehoben oder unter diese abgesenkt werden kann (siehe Fig. 4). Dieses Zugmittel 22 ist aus Gründen der Übersichtlichkeit in der Figur 1 nicht dargestellt. Über das endlose Zugmittel 22 sind in seinem angehobenen Zustand, in dem die Oberfläche des Zugmittels 22 über die von den Oberseiten der Rollen 18 gebildete Förderfläche hinausragt, die Fördergüter in Richtung des Pfeiles antreibbar. Ein Absenken des Zugmittels 22 über die Betätigungselemente 20 unter die Förderfläche der Rollen 18 bedingt, daß die Fördergüter auf dem Stauförderer 10 anhalten und sich somit aufstauen. Die Betätigungselemente 20 können beispielsweise über ein längliches Element, vorzugsweise eine Stange 24 angetrieben werden, die hierzu in Förderrichtung verschoben wird. Zum Anheben des Zugmittels 22 ist in dem Ausführungsbeispiel gemäß Figur 1 die Stange 24 hierzu nach links zu verschieben. In dem dargestellten Ausführungsbeispiel sind die Betätigungselemente 20 als geteilte exzentrische Nockenscheiben ausgebildet, die bereits aus dem US-Patent 3,854,576 und dem US-Patent 4,878,578 bekannt sind und auf deren Offenbarung hiermit Bezug genommen wird.

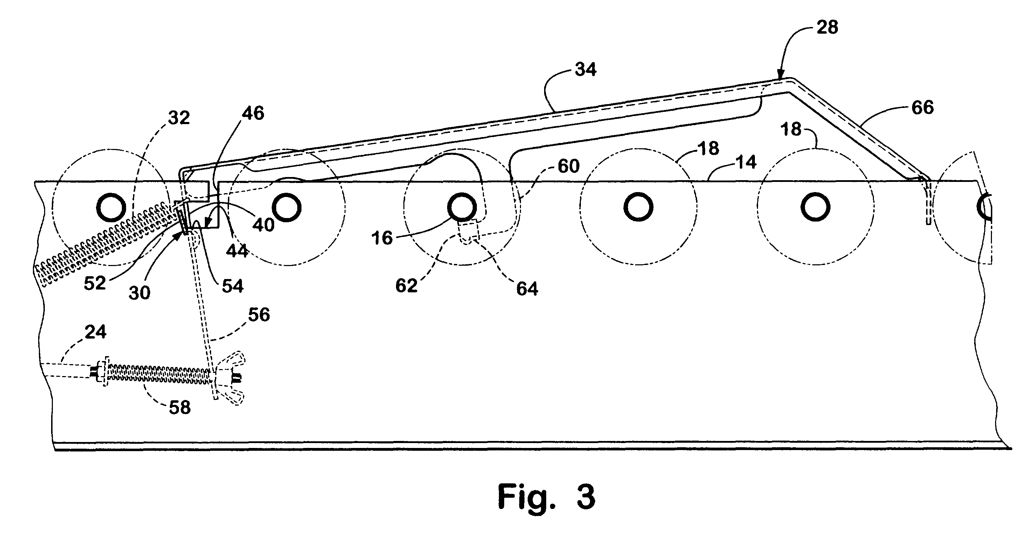

Die Stange 24 ist über das Sensorelement in Längsrichtung verschiebbar, um das Betätigungselement 20 in Gang zu setzen. Das Sensorelement 26 weist hierzu ein Geberelement 28 auf, das schwenkbar über eine achslose Lagerung 30 gelagert ist (s. Fig. 3). Das Geberelement 28 ist mit einem als Sensorfläche 34 bezeichneten Abschnitt versehen, der in den Förderweg der Fördergüter entlang des Stauförderers 10 hereinragend über ein Vorspannelement 32 nach oben vorgespannt ist. In dem dargestellten Ausführungsbeispiel ist die Sensorfläche 34 aus einem Paar von fingerartig nebeneinander und mit Abstand zueinander verlaufenden Stegen gebildet, die über die hierüber hinweggleitenden Fördergutteile betätigbar sind. Die fingerartigen Stege der Sensorfläche 34 sind an dem einer achslosen Lagerung 30,70 abgewandten Ende über ein quer zur Förderrichtung ausgerichtetes Verbindungselement 36 und an dem der achslosen Lagerung 30,70 zugewandten Ende über ein weiteres quer zur Förderrichtung ausgerichtetes Verbindungselement 38 zu einem rahmenförmigen Gebilde (siehe Fig. 6) miteinander verbunden.

In einer ersten Ausführungsform ist die achslose Lagerung 30 als Schneidenlagerung ausgebildet, die im wesentlichen aus einem Paar von Hebelarmen 40 gebildet, an dessen nach unten gerichteten Enden Schneidkanten 42 angeordnet sind, die sich in rechteckigen Ausnehmungen 44 der senkrechten Stützwände 14 abstützen. Die achslose Lagerung 30 wird bestimmt durch die nach unten gerichteten Schneidkanten 40, die sich auf der unteren Begrenzungsfläche 54 in der Ausnehmung 44 in derart abstützen, daß die Hebelarme 40 in Förderrichtung gesehen nach vorne und hinten pendeln können. Hierdurch ist das Geberelement 28 über die nach unten gerichteten Schneidkanten 42 in den Ausnehmungen 44 verschwenkbar. Desweiteren ist in den Ausnehmungen 44 eine nach oben gerichtete Öffnung 46 vorgesehen, durch die das Geberelement 28 mit seinen Hebelarmen 40 in die Ausnehmung 44 eingeführt werden kann.

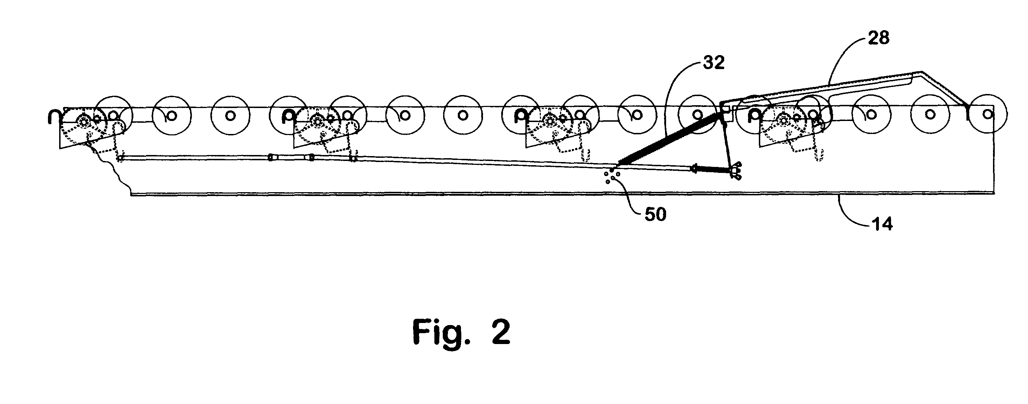

An den quer zur Förderrichtung ausgerichteten Verbindungssteg 38 sowie auf der den Schneidkanten 42 gegenüberliegende Ende der Hebelarme 40 schließen sich Stifte 48 an, die sich nach oben erstrecken (siehe. Fig. 6). Die Stifte 48 wirken mit den Vorspannelementen 32 zusammen, die in dem vorliegenden Ausführungsbeispiel als Schraubenfedern ausgebildet sind. Das andere Ende des Vorspannelementes 32 ist in einer der Öffnungen 50 verankert, die entlang der vertikalen Stützwände 14 des Stauförderes 10 angeordnet sind (siehe Figur 2). Durch diese Art der Anordnung wird durch das Vorspannelement 32 die fingerförmige Sensorfläche 34 nach oben in den Förderweg des Fördergutes entlang des Stauförderers 10 vorgespannt. Zusätzlich werden durch das Vorspannelement 32 die Hebelarme 40 in eine Ecke der Ausnehmung 44 gedrängt, die von einer unteren Begrenzungsfläche 54 und der in Förderrichtung stromaufwärts gesehenen vertikalen Begrenzungsfläche 52 gebildet wird (siehe Fig. 3).

Desweiteren sind an dem Verbindungssteg 38 ein Paar von sich nach unten erstreckenden Armen 56 angeformt, die über ein Druckfederelement 58 mit der Stange 24 verbunden sind. Das Druckfederelement 58 weist eine ausreichende Federkraft aus, um über das Geberelement 28 die Stange 24 unter normalen Betriebsbedingungen zu verschieben. Für den Fall, daß die Stange 24 aufgrund der Stellung der exzentrischen Nockenscheiben des Betätigungselementes 20 blockiert wird, gleicht die Druckfeder 58 die Bewegung der Arme 56 aus bis die exzentrischen Nockenscheiben wieder in einer Stellung ausgerichtet sind, in der eine Betätigung der Stange 24 stattfinden kann. Außerdem ist an jedem fingerförmigen Teil der Sensorfläche 34 und in Förderrichtung gesehen etwa in dessen Mitte ein sich nach unten erstreckendes Hakenelement 60 angeordnet, der ein Abschlußteil 62 aufweist, das sich unter die Achse 16 erstreckt. Hierdurch wird von dem Hakenelement 60 und insbesondere von seinem Abschlußteil 62 eine nach oben gerichtete Bewegung der Sensorfläche 34 unterbunden. Das Abschlußteil 62 ist mit einem Überzug 64 aus dämpfenden Gummimaterial umgeben, um die Geräuschentwicklung der in das Hakenelement 60 eingreifende Achse 16 zu minimieren. Darüber hinaus ist an dem der achslosen Lagerung 30,70 abgewandten Ende der fingerförmigen Sensorfläche ein Abweiselement 66 angeordnet, das in Förderrichtung F gesehen nach unten geneigt ist und die Aufgabe hat ein Verfangen der fingerförmigen Sensorflächen 34 mit stromabwärts darübergleitenden Fördergutteilen zu verhindern sowie ermöglicht, daß Fördergutteile von Hand gegen die Förderrichtung über das Sensorelement 26 geschoben werden können.

Der Figur 6, die eine Seitenansicht des Geberelementes 28 gemäß Figur 5 zeigt, ist zu entnehmen, daß der vertikale Abstand d zwischen dem dem Hebelarm 40 zugewandten Ende des Stiftes 48 und der nach unten gerichteten Schneidkante 42 sehr kurz ist und somit auch einen entsprechend kurzen Hebelarm bildet. Der Abstand d ist vorzugsweise geringer als etwa 0,025 m (1 inch) und mißt in besonders bevorzugter Ausführungsform geringer als 0,0125 m (one half of an inch). Im vorliegenden Ausführungsbeispiel weist der Abstand d ein Maß von etwa 0,01 m (3/8 of an inch) auf. Um die fingerförmige Sensorfläche 34 mit einem derartig kurzen Hebelarm 40 nach oben vorspannen zu können, muß die Federkraft des Vorspannelementes 32 entsprechend größer ausgelegt werden. Vorzugsweise beträgt die zusammengesetzte Federkraft des Vorspannelementes 32 mindestens etwa 22,5 Newton (5.0 pounds). In dem dargestellten Ausführungsbeispiel beträgt die Federkraft von jeder der beiden Federelemente, aus denen das Vorspannelement 32 gebildet ist, annähernd 15,7 Newton (3.5 pounds). Hieraus resultiert eine zusammengesetzte Federkraft von mindestens etwa 31,4 Newton (7.0 pounds). Die Kombination aus einem kurzen Hebelarm 40 und einem kräftigen Vorspannelement hat den Vorteil, daß das Vorspannelement nur um einen geringen Betrag seiner Gesamtlänge ausgelängt wird, wenn das Sensorelement 26 von dem Fördergut betätigt wird. Da die Federkraft in Abhängigkeit von dem Betrag der Verlängerung der Feder proportional variiert, führt diese Anordnung dazu, daß die Federkraft, die durch das Vorspannelement 32 aufgebracht wird, weitestgehend den gleichen Betrag über den gesamten Weg der Bewegung des Geberelementes 28 aufweist. Dies führt vorteilhafterweise dazu, daß die Betätigungskraft für das Geberelement 28 über den gesamten Bereich der Bewegung der fingerförmigen Sensorfläche 34 konstant ist. Vorteilhafterweise erlaubt die Benutzung einer achslosen Lagerung 30,70 ein Vorspannelement 32 mit einer starken Federkraft zu benutzen. Der Grund hierfür ist, daß obwohl durch die starke Federkraft eine zusätzliche Lagerbelastung auf die achslose Lagerung 30 aufgebracht wird, die Reibung der Lagerung in Schwenkrichtung gesehen von der Lagerbelastung unbeeinflusst bleibt. Dies steht im Gegensatz zu Lagerungen über Achsen, die einen beträchtlichen Anstieg der Reibung in Drehrichtung verzeichnen, wenn diese durch Lagerbelastungen beaufschlagt werden.

Es ist daher möglich, das Sensorelement 26 mit einer vertikalen Kraft von weniger als etwa 4,4 Newton (one pound) zu betätigen. Diese Kraft entspricht der, die von einem leeren Behälter mit einem Gewicht von etwa 0,9 kg (two pounds) auf die Sensorfläche 34 aufbringbar ist. In bevorzugter Ausführungsform ist das Sensorelement 26 bereits mit einer vertikalen Kraft von weniger als etwa 2,26 Newton (8 ounces) betätigbar, dies entspricht der von einem leeren Arikelbehälter mit einem Gewicht von annähernd 0,45 kg (one pound) aufgebrachten Kraft. Das Sensorelement 26 ist auch geeignet, durch eine nach unten gerichtete Kraft von etwa 1,8 Newton (0.4 pounds) betätigt zu werden. Diese Kraft entspricht im wesentlichen der von einem leeren Artikelcontainer mit einem Gewicht von etwa 0,36 kg (0.6 pound) aufbringbaren Kraft.

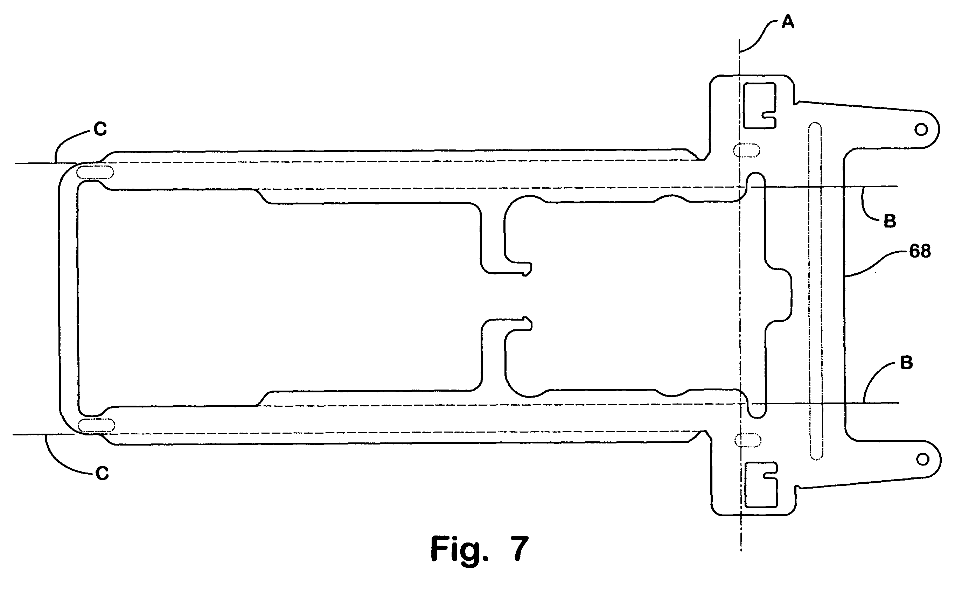

Vorteilhafterweise ist das Geberelement 28 aus einem einzelnem flachen Metallblech 68 herstellbar (siehe Fig. 7). Das flache Metallblech 68 wird entlang der Umformlinie A in einem rechten Winkel gebördelt, um die Arme 56 rechtwinklig zur Sensorfläche auszurichten und wird zusätzlich entlang der Umformlinien B und C gebördelt, um die fingerförmige Sensorfläche 34 zu versteifen. Hierdurch wird eine mechanische Steifigkeit des Geberelementes 28 erreicht und gleichzeitig besteht die Möglichkeit aus dem Metallblech 68 die Schneidkante 42 der achslosen Lagerung 30 sowie den seitlichen Verbindungssteg 36 zu bilden und auch andere Einzelheiten der Geberelementes 28. Zur Herstellung des Geberelementes 28 wird das Metallblech 68 ausgestanzt und anschließend durch Umformungen versteift und Angriffspunkte für Lagerungen geschaffen. Das Geberelement 28 ist über seine Hebelarme 40 in Ausnehmungen 44 der senkrechten Stützwände 14 des Tragrahmens 12 des Stauförderers 10 lagerbar. Für deren Vorspannung werden die Vorspannelemente 32 zwischen den Öffnungen 50 in dem Tragrahmen 12 und den Stiften 48 befestigt. Hierdurch wird ein stabiles Sensorelement 26 mit einem Vorspannelement 32 geschaffen, das die bewegbaren Teile der achslosen Lagerung 30 in ihren Betriebspositionen hält.

Obwohl im Ausführungsbeispiel ein mechanisch betätigbarer Staurollenförderer dargestellt ist, kann das zuvor beschriebene Erfindungsprinzip auch auf pneumatisch betätigte Staurollenförderer, die beispielsweise in dem US-Patent 5,191,967 beschrieben sind, übertragen werden. Auf die Offenbarung des vorgenannten Patentes wird hiermit Bezug genommen. In einer derartigen Anwendung sind die Betätigungselemente 20 pneumatisch ausgebildet und werden über Ventile gesteuert, die von den Armen 56 des Geberelementes 28 betätigt werden. Vorzugsweise wird, um die Betätigungskraft zu minimieren, ein ausbalanciertes Tellerventil (balance poppet valve) eingesetzt.

Desweiteren ist in dem Ausführungsbeispiel die Erfindung mit einer fingerförmig ausgebildeten Sensorfläche 34 versehen. Die Sensorfläche 34 kann in jeder im Stand der Technik bekannten Weise ausgeführt werden, so daß auch hier die Sensorflächen 34 in Form von Rollen Anwendung finden können. Auch ist es möglich anstatt der beschriebenen Federelemente Zugfedern, Druckfedern oder Torsionsfedern zu verwenden. Als Vorspannelement kann auch ein Gegengewicht eingesetzt werden.

Die vorliegende Erfindung bietet auch die Möglichkeit die auf dem Stauförderer 10 aufgestauten Fördergüter in einem Block abzuziehen. Die Betätigung der länglichen Stange 24 über eine bewegungsdämpfende Druckfeder 58 ermöglicht die Verwendung von Kolben-Zylinder-Einheiten zum Antrieb, wie z. B. von Pneumatikzylindern, um die Betätigungselemente von allen Abschnitten des Stauförderers miteinander zu verbinden. Die Stangen können unabhängig von der Postition der zugeordneten Sensorelemente betätigt werden.

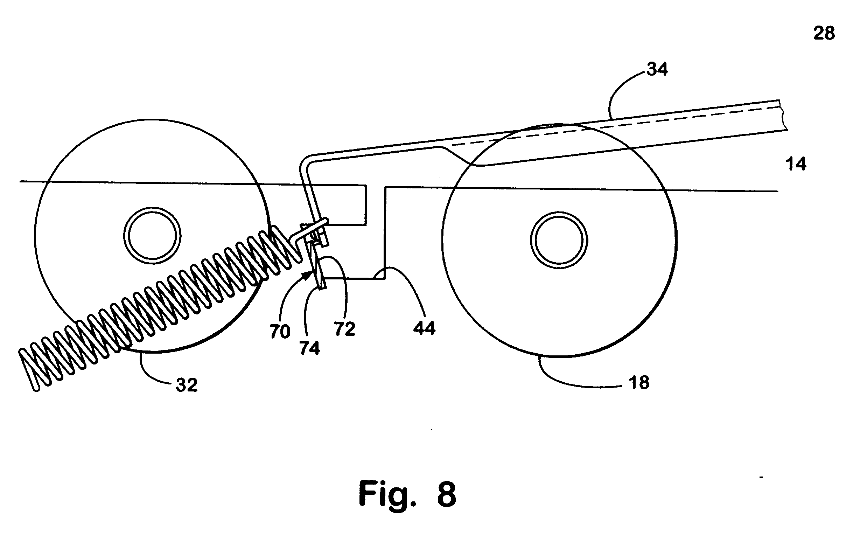

In einer weiteren Ausführungsform der achslosen Lagerung, die mit der Bezugsziffer 70 gekennzeichnet ist, ist in der Fig. 8 dargestellt. Die achslose Lagerung 70 weist ein flaches flexibles Element 72 auf, das an seinem unteren Ende 74 in einem Schlitz der unteren Begrenzungsfläche der Ausnehmung 44 befestigt ist. Die Betätigung des Sensorelementes 28 bedingt ein Verbiegen des flexiblen Elementes 72 in Förderrichtung, um das Geberelement 28 in bezug auf die senkrechten Stützwände 14 verschwenken zu können. Diese achslose Lagerung 70 weist die gleichen Vorteile wie die achslose Lagerung 30 auf und zwar die geringe Reibung und die wesentliche Unanfälligkeit gegenüber Belastungen der Lagerung durch die nach unten gerichteten Betätigungskräfte.

## Patentansprüche

1. Sensorelement für die Erkennung von Fördergütern auf einer Förderfläche bestehend aus
einem Sensorelement (26) mit einem Geberelement (28),
einer Schwenklagerung, über die das Geberelement (28) um eine horizontale Achse schwenkbar ist,
und einem Vorspannelement (32), durch das das Sensorelement (28) in eine Stellung zur Erkennung von Fördergut vorspannbar ist,
dadurch gekennzeichnet,
daß die Schwenklagerung als achslose Lagerung (30,70) ausgebildet ist.

2. Sensorelement nach Anspruch 1,
dadurch gekennzeichnet,
daß das Vorspannelement (32) als Feder ausgebildet ist, das auf einen Hebelarm (40) wirkt, der an dem Geberelement (28) und außerhalb des Ortes seiner Schwenklagerung angeordnet ist.

3. Sensorelement nach Anspruch 1 oder 2,
dadurch gekennzeichnet,
daß das Geberelement (28) eine Sensorfläche (34) aufweist, die durch eine Betätigungskraft über einen Betätigungsweg bewegbar ist und der Hebelarm (40) derart ausgebildet ist, daß das Vorspannelement (32) über einen geringeren Weg als der Betätigungsweg bewegbar ist.

4. Sensorelement nach einem der Ansprüche 1 bis 3,
dadurch gekennzeichnet,
daß die achslose Lagerung (30) als Schneidenlagerung ausgebildet ist, die eine Schneidkante (42) aufweist, die wiegend das Geberelement (28) auf einer Unterlage (Ausnehmung 44) lagert.

5. Sensorelement nach einem der Ansprüche 1 bis 3,
dadurch gekennzeichnet,
daß die achslose Lagerung (70) im wesentlichen aus einem flexiblen Element (72) besteht, das auf einer Unterlage (Ausnehmung 44) befestigt ist.

6. Sensorelement nach einem der Ansprüche 1 bis 5,
dadurch gekennzeichnet,
daß das Geberelement (28) und die Schwenklagerung als ein gemeinsames Blechformteil ausgebildet sind.

7. Sensorelement nach einem der Ansprüche 1 bis 7,
dadurch gekennzeichnet,
daß die Betätigungskraft geringer ist als 4,5 Newton.

8. Sensorelement nach einem der Ansprüche 1 bis 7,
dadurch gekennzeichnet,
daß die Betätigungskraft geringer ist als 2,3 Newton.

9. Sensorelement nach einem der Ansprüche 1 bis 8,
dadurch gekennzeichnet,
daß das Vorspannelement (32) eine zusammengesetzte Federkraft von größer als etwa 22,1 Newton aufweist.

10. Sensorelement nach einem der Ansprüche 1 bis 9,
dadurch gekennzeichnet,
daß das Vorspannelement (32) über einen Hebelarm (40) auf das Geberelement (28) einwirkt und der Hebelarm (40) eine Länge aufweist, die geringer ist als etwa 0,025 m.

11. Sensorelement nach Anspruch 10,
dadurch gekennzeichnet,
daß der Hebelarm (40) eine Länge von weniger als etwa 0,012 m aufweist.

12. Stauförderer mit einem Sensorelement (26) nach einem der vorhergehenden Ansprüche 1 bis 8,
dadurch gekennzeichnet,
daß der Stauförderer (10) einen Tragrahmen (12) aufweist, der eine Förderfläche für Fördergüter bildet und ein Betätigungselement (20), das von dem Geberelement (28) zur Steuerung mindestens eines Abschnittes der Förderfläche betätigbar ist.

13. Stauförderer nach Anspruch 12,
dadurch gekennzeichnet,
daß das Betätigungselement (20) mechanisch über mindestens ein Geberelement (28) betätigbar ist.

14. Stauförderer nach Anspruch 13,
dadurch gekennzeichnet,
daß mindestens ein Geberelement (28) eine Sensorfläche (34) aufweist und das Betätigungselement (20) mechanisch über eine Stange (24), die sich ausgehend von der Sensorfläche (24) erstreckt, betätigbar ist.

15. Stauförderer nach Anspruch 14,
dadurch gekennzeichnet,
daß die Sensorfläche (34) über eine zusammendrückbares Element mit der Stange (24) verbunden ist.

16. Stauförderer nach Anspruch 15,
dadurch gekennzeichnet,
daß zusammendrückbare Element eine Feder (58) ist.

17. Stauförderer nach Anspruch 12,
dadurch gekennzeichnet,
daß das Betätigungselement (20) über mindestens ein Sensorelement (26) pneumatisch betätigbar ist.

18. Stauförderer nach Anspruch 16,
dadurch gekennzeichnet,
daß das Geberelement (26) eine Sensorfläche (34) aufweist, und das Betätigungselement (20) pneumatisch über ein Ventil betätigbar ist, das von der Sensorfläche (34) betätigbar ist.

19. Stauförderer nach Anspruch 18,
dadurch gekennzeichnet,
daß Ventil ein ausbalanciertes Tellerventil ist.

20. Stauförderer nach einem der Ansprüche 11 bis 19 sowie 4 oder 5,
dadurch gekennzeichnet,
daß die Unterlage der Schwenklagerung als Ausnehmung (44) in dem Tragrahmen (12) ausgebildet ist.

21. Stauförderer nach Anspruch 20,
dadurch gekennzeichnet,
daß das Vorspannelement (32) das Geberelement in Richtung unterer Begrenzungsfläche (54) der Ausnehmung (44) vorspannt.

## Claims

1. A sensor element for recognising goods being conveyed on a conveyor surface, consisting of
a sensor element (26) with a generating element (28),
a pivot bearing by means of which the generating element (28) can be pivoted about a horizontal axis,
and a biasing element (32) by means of which the sensor element (28) can be biased into a position for recognising goods being conveyed,
characterised in that
the pivot bearing is in the form of a spindle-less bearing (30, 70).

2. A sensor element according to Claim 1,
characterised in that the biasing element (32) is in the form of a spring which acts on a lever arm (40) which is located on the generating element (28) and outside the location of its pivot bearing.

3. A sensor element according to Claim 1 or 2,
characterised in that the generating element (28) has a sensor surface (34) which can be moved over an actuation path by an actuating force and the lever arm (40) is constructed such that the biasing element (32) can be moved over a shorter path than the actuation path.

4. A sensor element according to one of Claims 1 to 3, characterised in that the spindle-less bearing (30) is in the form of a knife-edge bearing which has a knife-edge (42) which rocks the generating element (28) on a base (cutout 44).

5. A sensor element according to one of Claims 1 to 3, characterised in that the spindle-less bearing (70) essentially consists of a flexible element (72) which is fastened to a base (cutout 44).

6. A sensor element according to one of Claims 1 to 5, characterised in that the generating element (28) and the pivot bearing are in the form of a common shaped sheet metal part.

7. A sensor element according to one of Claims 1 to 7, characterised in that the actuating force is less than 4.5 newton.

8. A sensor element according to one of Claims 1 to 7, characterised in that the actuating force is less than 2.3 newton.

9. A sensor element according to one of Claims 1 to 8, characterised in that the biasing element (32) has a combined elastic force of more than about 22.1 newton.

10. A sensor element according to one of Claims 1 to 9, characterised in that the biasing element (32) acts on the generating element (28) by means of a lever arm (40) and the lever arm (40) is of a length which is less than about 0.025 m.

11. A sensor element according to Claim 10,
characterised in that the lever arm (40) has a length of less than about 0.012 m.

12. An accumulating conveyor having a sensor element (26) according to one of the preceding claims 1 to 8, characterised in that the accumulating conveyor (10) has a supporting frame (12) which forms a conveyor surface for goods being conveyed and an actuating element (20) which can be actuated by the generating element (28) to control at least a section of the conveyor surface.

13. An accumulating conveyor according to Claim 12,
characterised in that the actuating element (20) can be actuated mechanically by means of at least one generating element (28).

14. An accumulating conveyor according to Claim 13,
characterised in that at least one generating element (28) has a sensor surface (34) and the actuating element (20) can be actuated mechanically by means of a rod (24) which extends out from the sensor surface (24) [sic].

15. An accumulating conveyor according to Claim 14,
characterised in that the sensor surface (34) is connected to the rod (24) by means of a compressible element.

16. An accumulating conveyor according to Claim 15,
characterised in that the compressible element is a spring (58).

17. An accumulating conveyor according to Claim 12,
characterised in that the actuating element (20) can be actuated pneumatically by means of at least one sensor element (26).

18. An accumulating conveyor according to Claim 16,
characterised in that the generating element (26) has a sensor surface (34), and the actuating element (20) can be actuated pneumatically via a valve which can be actuated by the sensor surface (34).

19. An accumulating conveyor according to Claim 18,
characterised in that the valve is a balanced disc valve.

20. An accumulating conveyor according to one of Claims 11 to 19 and 4 or 5, characterised in that the base of the pivot bearing is in the form of a recess (44) in the supporting frame (12).

21. An accumulating conveyor according to Claim 20,
characterised in that the biasing element (32) biases the generating element in the direction of the lower limit surface (54) of the recess (44).

## Revendications

1. Elément capteur pour reconnaître des matières à transporter sur une surface de transport, comportant un élément capteur (26) ayant un élément transmetteur (28), un appui pivotant, grâce auquel l'élément transmetteur (28) peut pivoter autour d'un axe horizontal, et un élément de précontrainte (32), par lequel l'élément capteur (26) peut être précontraint dans une position pour reconnaître une matière à transporter,
caractérisé en ce que l'appui pivotant est réalisé comme appui (30,70) dépourvu d'axe.

2. Elément capteur selon la revendication 1,
caractérisé en ce que l'élément de précontrainte (32) est réalisé comme ressort qui agit sur un bras de levier (40) qui est agencé sur l'élément transmetteur (28) et à l'extérieur de l'endroit de son appui pivotant.

3. Elément capteur selon la revendication 1 ou 2,
caractérisé en ce que l'élément transmetteur (28) présente une surface de capteur (34) qui peut être déplacée par une force d'actionnement sur une course d'actionnement, et le bras de levier (40) est réalisé de sorte que l'élément de précontrainte (32) peut être déplacé sur une course plus faible que la course d'actionnement.

4. Elément capteur selon une des revendications 1 à 3,
caractérisé en ce que l'appui (30) dépourvu d'axe est réalisé comme support à couteau qui présente une arête (42) qui supporte en basculant l'élément transmetteur (28) sur une base (évidement 44).

5. Elément capteur selon une des revendications 1 à 3,
caractérisé en ce que l'appui (70) dépourvu d'axe est constitué généralement d'un élément souple (72) qui est fixé sur une base (évidement 44).

6. Elément capteur selon une des revendications 1 à 5,
caractérisé en ce que l'élément transmetteur (28) et l'appui pivotant sont réalisés comme pièce de tôle commune.

7. Elément capteur selon une des revendications 1 à 6,
caractérisé en ce que la force d'actionnement est inférieure à 4,5 newtons.

8. Elément capteur selon une des revendications 1 à 7,
caractérisé en ce que la force d'actionnement est inférieure à 2,3 newtons.

9. Elément capteur selon une des revendications 1 à 8,
caractérisé en ce que l'élément de précontrainte (32) présente une force élastique composée supérieure à environ 22,1 newtons.

10. Elément capteur selon une des revendications 1 à 9,
caractérisé en ce que l'élément de précontrainte (32) agit, par l'intermédiaire d'un bras de levier (40), sur l'élément transmetteur (28), et le bras de levier (40) présente une longueur qui est inférieure à environ 0,025 m.

11. Elément capteur selon la revendication 10,
caractérisé en ce que le bras de levier (40) présente une longueur inférieure à environ 0,012 m.

12. Transporteur à accumulation comportant un élément capteur (26) selon une des revendications précédentes 1 à 8,
caractérisé en ce que le transporteur à accumulation (10) présente un bâti de support (12), qui forme une surface de transport pour des matières à transporter, et un élément d'actionnement (20) qui peut être actionné par l'élément transmetteur (28) pour commander au moins un tronçon de la surface de transport.

13. Transporteur à accumulation selon la revendication 12,
caractérisé en ce que l'élément d'actionnement (20) peut être actionné de façon mécanique par l'intermédiaire d'au moins un élément transmetteur (28).

14. Transporteur à accumulation selon la revendication 13,
caractérisé en ce qu'au moins un élément transmetteur (28) présente une surface de capteur (34), et l'élément d'actionnement (20) peut être actionné mécaniquement par l'intermédiaire d'une barre (24) qui s'étend à partir de la surface de capteur (34).

15. Transporteur à accumulation selon la revendication 14,
caractérisé en ce que la surface de capteur (34) est reliée à la barre (24) par l'intermédiaire d'un élément compressible.

16. Transporteur à accumulation selon la revendication 15,
caractérisé en ce que l'élément compressible est un ressort (58).

17. Transporteur à accumulation selon la revendication 12,
caractérisé en ce que l'élément d'actionnement (20) peut être actionné de façon pneumatique par l'intermédiaire d'au moins un élément capteur (26).

18. Transporteur à accumulation selon la revendication 16,
caractérisé en ce que l'élément transmetteur (28) présente une surface de capteur (34), et l'élément d'actionnement (20) peut être actionné de façon pneumatique par l'intermédiaire d'une soupape qui peut être actionnée par la surface de capteur (34).

19. Transporteur à accumulation selon la revendication 18,
caractérisé en ce que la soupape est une soupape à disque équilibrée.

20. Transporteur à accumulation selon une des revendications 11 à 19 ainsi que 4 ou 5,
caractérisé en ce que la base de l'appui pivotant est réalisée comme évidement (44) dans le bâti de support (12).

21. Transporteur à accumulation selon la revendication 20,
caractérisé en ce que l'élément de précontrainte (32) précontraint l'élément transmetteur en direction de la surface de limitation inférieure (54) de l'évidement (44).
